Europäisches Patentamt

European Patent Office

Office européen des brevets

(19)

(11) EP 0 636 869 B1

(12) EUROPÄISCHE PATENTSCHRIFT

(45) Veröffentlichungstag und Bekanntmachung des Hinweises auf die Patenterteilung:
13.01.1999 Patentblatt 1999/02

(51) Int Cl.⁶: **G01K 15/00**

(21) Anmeldenummer: 93112002.6

(22) Anmeldetag: 27.07.1993

(54) **Schaltungsanordnung zum Ermitteln der Temperatur einer stromgeregelten elektrischen Spule**

Circuit arrangement for determining the temperature of a current regulated electric coil

Circuit pour déterminer la température d'une bobine électrique à courant contrôle

(84) Benannte Vertragsstaaten:
DE FR GB IT

(43) Veröffentlichungstag der Anmeldung:
01.02.1995 Patentblatt 1995/05

(73) Patentinhaber: SIEMENS
AKTIENGESELLSCHAFT
80333 München (DE)

(72) Erfinder: Menten, Frank, Dipl.-Ing. (FH)
D-93055 Regensburg (DE)

(56) Entgegenhaltungen:
EP-A- 0 192 373          DE-A- 3 240 153

• PATENT ABSTRACTS OF JAPAN vol. 7, no. 234 (P-230)(1379) 18. Oktober 1983 & JP-A-58 121 418 (MATSUSHITA) 19. Juli 1983
• PATENT ABSTRACTS OF JAPAN vol. 7, no. 234 (P-230)(1379) 18. Oktober 1983 & JP-A-58 121 419 (MATSUSHITA) 19. Juli 1983
• PATENT ABSTRACTS OF JAPAN vol. 7, no. 150 (P-297)(1295) 30. Juni 1983 & JP-A-58 061 432 (TOKYO SHIBAURA DENKI) 12. April 1983

**Beschreibung**

Die Erfindung betrifft eine Schaltungsanordnung nach dem Oberbegriff von Anspruch 1 und Anspruch 6. Sie dient zum Ermitteln der Temperatur beispielsweise der Spule eines elektromagnetischen Proportionalventils in einer hydraulischen Stellvorrichtung, wie sie z.B. bei Kraftfahrzeug-Lenksystemen verwendet werden.

Ein bekanntes Hinterachslenksystem (US-A 4 770 264) enthält eine solche Stellvorrichtung mit einem hydraulischen Stellglied, das einen hydraulischen Stellzylinder und ein den Flüssigkeitsstrom zu dem Stellzylinder bestimmendes elektrisch betätigtes Steuerventil oder Proportionalventil aufweist. Sie enthält auch ein elektronisches Steuergerät, durch das die von verschiedenen Sensoren in dem Kraftfahrzeug gelieferten Signale ausgewertet und Steuersignale für das Stellglied erzeugt werden. Bekannt ist auch ein elektronisches Steuergerät, dessen Aufgabe es ist, die Lage des Stellzyinder-Kolbens einer Hinterachslenkung zu regeln (WO 89/10 865).

Die Öldurchflußmengen innerhalb der Komponenten eines hydraulischen Stellgliedes sind viskositäts- und damit temperaturabhängig. Insbesondere bei tiefen Temperaturen werden die Nominaldurchflußwerte nicht erreicht. Eine Folge davon ist, daß sich die Regelabweichung und die Positioniergenauigkeit des Stellsystems bei tiefen Temperaturen verschlechtern. Man kann, um die Temperaturabhängigkeit der Lageregelung zu berücksichtigen, die Temperatur des Stellgliedes, die ein ungefähres Maß für die Temperatur des Hydrauliköls ist, mit einem eigenen Temperatursensor messen. Ein solcher Sensor und die dazu erforderlichen Anschlüsse stellen allerdings einen nicht unbeachtlichen Aufwand dar.

Bekannt ist es auch, bei einer Steuerung eines automatischen Kraftfahrzeuggetriebes die Temperatur aus dem temperaturabhängig veränderlichen elektrischen Widerstand eines Getriebeelements zu bestimmen (DE-A 32 40 153). Es hat sich aber gezeigt, daß die Genauigkeit der Temperaturermittlung nicht nur von der Temperatur der Spule - und damit von dem Spulenwiderstand - und der Versorgungsspannung der Spule abhängt, sondern auch von dem elektrischen Gesamtwiderstand des Spulenstromkreises. Dieser hängt von den sonstigen Widerständen, wie z.B. Übergangswiderständen, Leitungswiderständen usw. ab, die in der Summe einen Temperatur-Offset verursachen, der von Spulenkreis zu Spulenkreis verschieden ist und den ermittelten Temperaturwert verfälscht. Man kann zwar einen Temperatursensor direkt in der Spule integrieren, dies ist aber wegen der schwierigen Befestigungsmöglichkeit und der nötigen, aus der Spule herauszuführenden Leitungen und Steckerkontakte sehr aufwendig und auch störanfällig.

Der Erfindung liegt die Aufgabe zugrunde, die Temperatur einer stromgeregelten elektrischen Spule genau zu bestimmen, ohne einen Temperatursensor an der Spule anbringen zu müssen.

Diese Aufgabe wird durch die Schaltungsanordnung nach Anspruch 1 und das Verfahren nach Anspruch 4 gelöst. Zweckmäßige Weiterbildungen der Erfindung sind in den Unteransprüchen niedergelegt. Ein Vorteil der erfindungsgemäßen Schaltungsanordnung liegt insbesondere darin, daß sie zuverlässig und wenig störanfällig ist.

Die Erfindung wird im folgenden anhand der Zeichnungen erläutert. Es zeigen:

Figur 1        einen Regelkreis, mit dem der eine Spule eines Elektromagneten durchfließende Strom geregelt wird, in schematischer Darstellung, und

Figur 2        ein Ausführungsbeispiel der erfindungsgemäßen Schaltungsanordnung als Blockschaltbild.

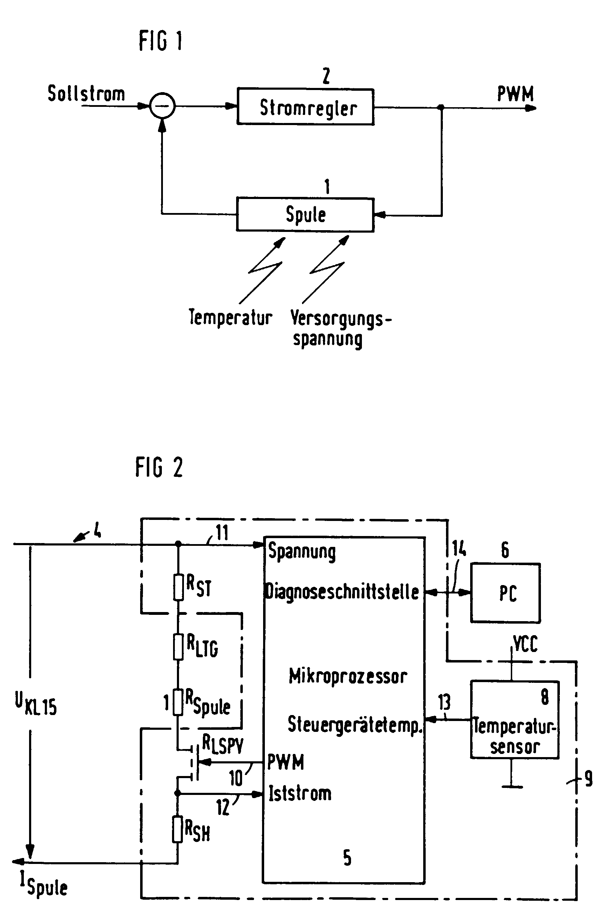

In einem herkömmlichen Regelkreis (Figur 1) wird der elektrische Strom, der eine Spule 1, z.B. die Spule eines elektromagnetischen Proportionalventils, durchfließt, mit einem Stromregler 2 geregelt. Eingangssignal des Stromreglers ist die Regelabweichung, d.h. die Differenz zwischen dem Sollstrom und dem Iststrom. Ausgangssignal des Stromreglers 2 ist ein Stellsignal PWM in Form eines pulsweitenmodulierten Signals, das den Spulenstrom $I_{Spule}$ regelt. Maßgebend für die Höhe des Spulenstroms ist das Puls-Pausen-Verhältnis *ppv* des Stellsignals.

Die Temperatur der Spule 1 und - wegen der Temperaturabhängigkeit des ohmschen Widerstands des metallischen Spulenmaterials - auch die Versorgungsspannung der Spule 1 sind Störgrößen des Regelkreises, die maßgeblich die Höhe des elektrischen Stromes in der Spule beeinflussen.

Eine Schaltungsanordnung zum Regeln des durch eine Spule 1 fließenden elektrischen Stromes schließt ein Spulenstromkreis 4 und einen als Stromregler dienenden Mikroprozessor 5 (Figur 2) ein. Für die Durchführung eines noch zu beschreibenden Temperaturabgleichs, d.h. zum Ermitteln eines Korrekturwerts für die Spulentemperatur, werden außerdem ein Rechner 6, z.B. in Form eines Personalcomputers PC, sowie ein Temperatursensor 8 verwendet. Dieser ist in einem hier nur schematisch durch eine gestrichelte Linie angedeuteten Steuergerät 9 enthalten, das auch den Mikroprozessor 5 sowie noch zu erwähnende Bauteile $R_{ST}$, $R_{LTG}$ und $R_{LSPV}$ enthält Das Steuergerät 9 dient z.B. zum Steuern eines automatischen Getriebes, einer Hinterachslenkung oder einer sonstigen Einrichtung in einem Kraftfahrzeug.

Der Spulenstromkreis 4 enthält folgende widerstandsbehaftete Elemente, die hier und in der Zeichnung durch ihren ohmschen Widerstand dargestellt sind: einen Sicherheitstransistor mit dein Widerstand $R_{ST}$, eine elektrische Leitung mit dem Leitungswiderstand $R_{LTG}$, die Spule 1 mit dem Widerstand $R_{Spule}$, einen Leistungsschalter mit dem Widerstand $R_{LSPV}$ und einen Shuntwiderstand zur Iststromermittlung mit dem Widerstandswert $R_{SH}$. Dem Leistungsschalter $R_{LSPV}$ wird über eine Leitung 10 ein Stellsignal zugeführt, das an einem mit PWM bezeichneten Ausgang des Mikroprozessors 5 ausgegeben wird. Dieses Stellsignal ist pulsweitenmoduliert, es enthält die Steuerinformation in Form seines Puls-Pause-Verhältnisses ppv und es regelt den Iststrom $I_{Spule}$ im Spulenstromkreis 4.

Als Versorgungsspannung für den Spulenstromkreis dient die sog. KL15-Spannung, d.h. die in dem Steuergerät 9 ohnehin vorliegende Spannung $U_{Kl15}$ der Fahrzeugbatterie. Diese Spannung wird über eine Leitung 11 einem ersten Analog/Digital-Eingang des Mikroprozessors 5 zugeführt und der Iststrom in dem Spulenstromkreis 4 gelangt über eine Leitung 12 zu einem zweiten Analog/Digital-Eingang des Mikroprozessors 5.

Die sonstigen Widerständen des Spulenstromkreises 4, d.h. dessen Widerstände mit Ausnahme des Spulenwiderstands selbst, werden wie folgt zusammengefaßt:

$$\Sigma\, R_{sonst} = R_{LSPV} + R_{LTG} + R_{SH} + R_{ST} \tag{1}$$

Der Iststrom $I_{Spule}$ durch die Spule 1 läßt sich wie folgt berechnen.

$$I_{Spule} = k \,*\, ppv \,*\, \frac{U_{KL15}}{R_{Spule(293K)} \,*\, \left[1 + \alpha \,*\, \left(T_{Spule} - 273\,K\right)\right] + \sum R_{sonst}} \tag{2}$$

und daraus ergibt sich durch Umformung die Spulentemperatur

$$T_{Spule} = k \,*\, ppv \,*\, \frac{U_{KL15}}{I_{Spule} \,*\, R_{Spule(293K)} \,*\, \alpha} - \frac{\sum R_{sonst}}{R_{Spule(293K)} \,*\, \alpha} - \frac{1}{\alpha} + 273\,K \tag{3}$$

Die in diesen und den nachfolgenden Gleichungen verwendeten Formelzeichen sind:

| | |
|---|---|
| $\alpha$ | Temperaturkoeffizient von Kupfer |
| $I_{Spule}$ | Iststrom (mittlerer) durch die Spule 1 |
| $k$ | Proportionalitätsfaktor (0,9...1,3) |
| $ppv$ | Puls-Pause-Verhältnis |
| $R_{SH}$ | Shunt zur Iststrom-Ermittlung |
| $R_{ST}$ | Sicherheitstransistor-Widerstand |
| $R_{LTG}$ | Leitungswiderstand |
| $R_{LSPV}$ | Widerstand des Leistungsschalters |
| $R_{Spule(293K)}$ | Widerstand des Spule 1 bei 293K |
| $\Sigma\, R_{sonst}$ | Summe der sonstigen Widerstände im Spulenstromkreis |
| $T_{Spule}$ | Temperatur der Spule |
| $T_{SG}$ | Temperatur des Steuergeräts 9 |
| $TA$ | Korrekturwert für Temperatur der Spule 1 |
| $U_{Kl15}$ | Versorgungsspannung (der Spule 4) |

Aus der Gleichung (3) ist ersichtlich, daß die Genauigkeit der Temperaturerfassung maßgeblich vom elektrischen Widerstand des Spulenstromkreises 4, d.h. insbesondere von der Summe aller sonstigen Widerstände $\Sigma R_{sonst}$ abhängt. Diese Summe bewirkt einen Temperatur-Offset, d.h. eine Verfälschung des ermittelten Temperaturwerts, der von Spulenkreis zu Spulenkreis verschieden ist.

Um diese Verfälschung zu kompensieren, wird ein Abgleich mit Hilfe eines in dem Steuergerät 9 enthaltenen Temperatursensors 8 durchgeführt, d.h. ein Korrekturwert TA für die Spulentemperatur ermittelt. Der von dem Temperatursensor 8 gelieferte Spannungswert wird über eine Leitung 13 einem dritten Analog/Digital-Eingang des Mikroprozessors 5 zugeführt. Dieser Temperaturabgleich wird von dem Rechner 6 ausgelöst, und zwar über eine Diagnoseschnittstelle des Mikroprozessors 5, mit der er über eine Leitung 14 verbunden ist. Vor dem Abgleich, d.h. vor der Ermittlung des Korrekturwertes TA, muß dafür gesorgt werden, daß das Steuergerät 9 und die Spule 1 die gleiche Temperatur aufweisen. Dann gilt für den Korrekturwert TA folgendes

$$TA = T_{SG} - k * ppv * \frac{U_{KL_{15}}}{I_{Spule} * R_{Spule(293K)} * \alpha} \qquad (4)$$

Hieraus ergibt sich:

$$T_{Spule} = k * ppv * \frac{U_{KL15}}{I_{Spule} * R_{Spule(293K)} * \alpha} + TA \qquad (5)$$

Mit dem einmal ermittelten Temperaturwert TA kann dann jederzeit und laufend durch den Mikroprozessor 5 die Temperatur der Spule 1 aus den von ihm empfangenen Meßwerten und den ihm bekannten Größen exakt ermittelt werden. Ändert sich nach einiger Zeit, vor allem bei kleinem Spulenwiderstand, der Widerstand in dem Spulenstromkreis zum Beispiel durch Alterung von Steckerkontakten, so kann durch eine erneute Ermittlung des Korrekturwertes TA die Meßgenauigkeit der erfindungsgemäßen Schaltungsanordnung in einfacher Weise wiederhergestellt werden.

**Patentansprüche**

1. In einem Steuergerät (9) enthaltene Schaltungsanordnung zum Ermitteln der Temperatur einer stromgeregelten elektrischen Spule (1), insbesondere der Spule eines elektromagnetischen Proportionalventils einer hydraulischen Stellvorrichtung, durch Messen des ohmschen Widerstandes der Spulenwicklung,
   **dadurch gekennzeichnet, daß** sie mit einer Steuer- und Auswerteschaltung (5) versehen ist,

   - von der der mittlere Strom ($I_{Spule}$) durch die Spule (1) mit einem pulsweitenmodulierten Stellsignal (PWM) geregelt wird;
   - durch die bei einer Temperatur ($T_{Spule}$) der Spule (1), die mit der Temperatur eines in dem Steuergerät enthaltenen Temperatursensors (8) abgeglichen ist, ein Korrekturwert ($TA$) ermittelt wird, der den Störeinfluß der sonstigen Widerstände ($\Sigma R_{sonst}$) in dem Spulenstromkreis (4) auf dessen Temperatur berücksichtigt, und
   - durch die die Temperatur der Spule (1) aus deren Versorgungsspannung ($U_{Kl15}$), dem Puls-Pause-Verhältnis (ppv) des Spulenstromes ($I_{Spule}$) und dem Spulenstrom selbst unter Berücksichtigung des Korrekturwertes ($TA$) berechnet wird.

2. Schaltungsanordnung nach Anspruch 1, dadurch gekennzeichnet, daß die Steuer- und Auswerteschaltung (5) als Mikroprozessor ausgebildet ist und daß durch diesen der Spannungsabfall in dem Spulenstromkreis (4) ermittelt und das die Regelung des Spulenstromes bewirkende pulsweitenmodulierte Stellsignal (PWM) abgegeben wird.

3. Schaltungsanordnung nach Anspruch 2, dadurch gekennzeichnet, daß in dem Spulenstromkreis (4) ein Leistungsschalter ($R_{LSPV}$) liegt, dem das pulsweitenmodulierte Stellsignal zugeführt wird.

4. Verfahren zum Ermitteln der Temperatur einer stromgeregelten elektrischen Spule, insbesondere der Spule eines elektromagnetischen Proportionalventils einer hydraulischen Stellvorrichtung, bei dem der ohmsche Widerstand der Spulenwicklung gemessen wird, **dadurch gekennzeichnet**,

   - daß der mittlere Strom durch die Spule mit einem pulsweitenmodulierten Stellsignal geregelt wird,
   - daß bei mit der Temperatur eines in einem Steuergerät angeordneten Temperatursensors abgeglichener Temperatur der Spule ein Korrekturwert ermittelt wird, der den Störeinfluß der sonstigen Widerstände im Spulenstromkreis (4) auf dessen Temperatur berücksichtigt, und
   - daß die Temperatur der Spule aus deren Versorgungsspannung, dem Puls-Pause-Verhältnis des Spulenstromes und dem Spulenstrom selbst unter Berücksichtigung des Korrekturwertes berechnet wird.

5. Verfahren nach Anspruch 4, dadurch gekennzeichnet, daß an einen Diagnoseeingang eines Mikroprozessors (5) ein Rechner (6) angeschlossen wird, von dem die Ermittlung des Temperatur-Korrekturwerts (TA) durch den Mikroprozessor (5) ausgelöst wird.

## Claims

1. Circuit arrangement, contained in a control unit (9), for determining the temperature of a current-regulated electric coil (1), in particular the coil of an electromagnetic proportional valve of a hydraulic actuating apparatus, by measuring the non-reactive resistance of the coil winding,
   **characterized in that** it is provided with a control and evaluation circuit (5),

   - by which the average current ($I_{coil}$) through the coil (1) is regulated with a pulse width-modulated actuating signal (PWM);
   - by means of which, at a temperature ($T_{coil}$) of the coil (1), which is adjusted with the temperature of a temperature sensor (8) contained in the control unit, a correction value *(TA)* is determined which takes account of the interfering influence of the other resistances ($\Sigma R_{other}$) in the coil circuit (4) at the temperature thereof, and
   - by means of which the temperature of the coil (1) is calculated from the supply voltage ($U_{K115}$) thereof, the mark-space ratio (msr) of the coil current ($I_{coil}$) and the coil current itself, with the correction value (TA) being taken into account.

2. Circuit arrangement according to Claim 1, characterized in that the control and evaluation circuit (5) is designed as a microprocessor, and in that the latter determines the voltage drop in the coil circuit (4) and outputs the pulse width-modulated actuating signal *(PWM)* which effects regulation of the coil current.

3. Circuit arrangement according to Claim 2, characterized in that the coil circuit (4) contains a power switch *($R_{LSPV}$)*, to which the pulse width-modulated actuating signal is fed.

4. Method for determining the temperature of a current-regulated electric coil, in particular the coil of an electromagnetic proportional valve of a hydraulic actuating apparatus, in which the non-reactive resistance of the coil winding is measured, **characterized**

   - in that the average current through the coil is regulated with a pulse width-modulated actuating signal,
   - in that at a coil temperature which is adjusted with the temperature of a temperature sensor arranged in a control unit, a correction value is determined which takes account of the interfering influence of the other resistances in the coil circuit (4) at the temperature thereof, and
   - in that the temperature of the coil is calculated from the supply voltage thereof, the mark-space ratio of the coil current and the coil current itself, with the correction value being taken into account.

5. Method according to Claim 4, characterized in that a computer (6) is connected to a diagnostic input of a microprocessor (5), the determination of the temperature correction value (TA) by the microprocessor (5) being initiated by the said computer.


## Revendications

1. Agencement de circuit, contenu dans un dispositif de commande (9), permettant de déterminer la température d'une bobine électrique (1) à régulation de courant, notamment la bobine d'une valve électromagnétique de type proportionnel d'un dispositif de réglage hydraulique, par mesure de la résistance ohmique de l'enroulement de bobine,
   caractérisé en ce qu'il est pourvu d'un circuit de commande et d'analyse (5),

   - par lequel le courant moyen ($I_{Spule}$) passant dans la bobine (1) est soumis à une régulation au moyen d'un signal de réglage à modulation d'impulsions en largeur *(PWM)*,
   - au moyen duquel, à une température *($T_{Spule}$)* de la bobine (1) qui est compensée par la température d'un capteur de température (8) contenu dans le dispositif de commande, une valeur de correction (TA) est déterminée, cette valeur de correction tenant compte de l'influence perturbatrice des autres résistances ($\Sigma R_{sonst}$) présentes dans le circuit de bobine (4) sur la température de celui-ci, et
   - au moyen duquel la température de la bobine (1) est calculée à partir de la tension d'alimentation ($U_{KL15}$) de celle-ci, du rapport impulsion-intervalle *(ppv)* du courant de bobine ($I_{Spule}$) et du courant de bobine lui-même, en tenant compte de la valeur de correction *(TA)*.

2. Agencement de circuit suivant la revendication 1, caractérisé en ce que le circuit de commande et d'analyse (5) est réalisé sous forme d'un microprocesseur et en ce qu'au moyen de celui-ci, la chute de tension dans le circuit de bobine (4) est déterminée et le signal de réglage à modulation d'impulsions en largeur *(PWM)* exerçant la régulation du courant de bobine est fourni.

3.  Agencement de circuit suivant la revendication 2, caractérisé en ce qu'un interrupteur de puissance ($R_{LSPV}$), auquel le signal de réglage à modulation d'impulsions en largeur est envoyé, est situé dans le circuit de bobine (4).

4.  Procédé, permettant de déterminer la température d'une bobine électrique à régulation de courant, notamment la bobine d'une valve électromagnétique de type proportionnel d'un dispositif de réglage hydraulique, selon lequel la résistance ohmique de l'enroulement de bobine est mesurée,
    caractérisé

    -   en ce que le courant moyen passant dans la bobine est soumis à une régulation au moyen d'un signal de réglage à modulation d'impulsions en largeur,
    -   en ce qu'à une température de la bobine compensée par la température d'un capteur de température situé dans le dispositif de commande, une valeur de correction est déterminée, cette valeur de correction tenant compte de l'influence perturbatrice des autres résistances présentes dans le circuit de bobine sur la température de celui-ci, et
    -   en ce que la température de la bobine est calculée à partir de la tension d'alimentation de celle-ci, du rapport impulsion-intervalle du courant de bobine et du courant de bobine lui-même, en tenant compte de la valeur de correction.

5.  Procédé suivant la revendication 4, caractérisé en ce qu'un calculateur (6), par lequel la détermination de la valeur de correction de température (TA) au moyen d'un microprocesseur (5) est déclenchée, est raccordé à une entrée de diagnostic du microprocesseur (5).

FIG 1

Sollstrom → [−] → **Stromregler** 2 → PWM

**Spule** 1

Temperatur   Versorgungsspannung

FIG 2

$U_{KL15}$

$R_{ST}$

$R_{LTG}$

$R_{Spule}$

$R_{LSPV}$

$R_{SH}$

$I_{Spule}$

11  Spannung

Diagnoseschnittstelle

Mikroprozessor

Steuergerätetemp.

PWM   10

Iststrom   12

5

14   6   PC

VCC

13   Temperatur-sensor   8

9